# EUROPÄISCHE PATENTSCHRIFT

(11) **EP 0 398 134 B1**
(45) Veröffentlichungstag und Bekanntmachung des Hinweises auf die Patenterteilung: **24.02.1993**
(21) Anmeldenummer: 90108690.0
(22) Anmeldetag: 09.05.1990
(51) Int. Cl.: B23K 20/02, B23K 20/14

(54) **Verfahren zum Verbinden von Werkstücken mittels Grenzflächendiffusion**
Procedure for joining workpieces by interfacial diffusion
Procédé pour joindre des pièces à usiner par diffusion à l'interface

(30) Priorität: 13.05.1989 DE 3915702
(43) Veröffentlichungstag der Anmeldung: 22.11.1990
(73) Patentinhaber: FORSCHUNGSZENTRUM JÜLICH GMBH, 52425 Jülich (DE)
(72) Erfinder: Stöver, Detlev, Dr., D-5162 Niederzier (DE); Buchkremer, Hans-Peter, Dr., D-5138 Heinsberg (DE); Hecker, Rudolf, Prof., Dr., D-5170 Jülich (DE)

(56) Entgegenhaltungen:
- EP-A- 0 090 762
- EP-A- 0 129 402
- DE-A- 2 824 369
- ELEKTRIE Band 32, Nr. 4, 1978, Seiten 194-199 ; E. KRANZ et al. : "Verfahren der Plasmatechnologie"* Seite 198. 2.4."Plasmaspritzen"*

## Beschreibung

Die Erfindung bezieht sich auf ein Verfahren zum Verbinden von Werkstücken, gemäß dem Oberbegriff des Anspruchs 1.

Das Diffusionsverschweißen von Werkstücken ist bekannt. Die Fügestellen der Werkstücke werden unter Druck und hoher Temperatur miteinander verbunden. Es kommt darauf an, Druck und Temperatur so einzustellen, daß die Werkstoffkomponenten des Werkstoffs zumindest eines der miteinander zu verbindenden Werkstückteile an der Verbindungsfläche in den Werkstoff des anderen Werkstückteils diffundieren, ggf. mit den Werkstoffkomponenten des anderen Werkstückteils chemisch reagieren, z.B. bei Metallen durch Ausbildung von Legierungen oder intermetallischen Phasen, bei Verbindung von keramischen Werkstoffteilen oder bei Verbindung von Metallen mit Keramik durch Oxid-, Nitrid-, Karbidbildung oder Diffusion. Durch Diffusionsverschweißen wird ein homogenes Gefüge an der Verbindungsstelle mit hoher Warmfestigkeit erreicht. Dabei ist dafür Sorge zu tragen, daß die zu verbindenden Fügestellen während des Schweißvorganges frei von Fremdstoffen gehalten werden, damit nicht unerwünschte Verbindungen oder Einschlüsse entstehen, die die Homogenität der Verbindungsstelle und damit ihre Festigkeit beeinträchtigen.

Es ist bekannt, ebene Flächen insbesondere durch Anwenden einachsigen Preßdrucks miteinander zu verbinden. Bei ebenen Flächen ist das Aufbringen gleichmäßigen Druckes bei entsprechender Führung der zu verbindenden Werkstückteile mit ausreichender Genauigkeit erreichbar. Bei komplizierten Werkstückformen ist das Einspannen der Werkstückteile an den Preßstempeln der Diffusionsschweißapparate und die Druckübertragung auf die Verbindungsflächen in vielen Fällen nur mit großem Aufwand erreichbar. Die maximal zu verbindende Flächengröße hängt dabei von der maximal aufbringbaren Kraft an der Fügestelle ab.

Aufgabe der Erfindung ist es, ein Diffusionsschweißverfahren zu schaffen, das eine Diffusionsschweißverbindung unabhängig von der Form der zu verbindenden Fläche, aber auch unabhängig von der Form der Werkstoffteile für verschiedene Werkstoffpaarungen ermöglicht.

Diese Aufgabe wird gemäß der Erfindung bei einem Verfahren der eingangs genannten Art durch die im Patentanspruch 1 angegebenen Maßnahmen gelöst. Danach werden die miteinander zu verbindenden Werkstückteile an ihren miteinander zu verbindenden Flächen aneinandergelegt und die Fügestelle an ihrem äußeren Rande zunächst beschichtet, es wird also die von außen sichtbare Naht zwischen den Werkstückteilen mit einer Schicht bedeckt. Das Schichtmaterial ist kompatibel mit den Werkstoffen der Werkstücke, die Werkstoffe werden vom Material der Schicht weder chemisch angegriffen noch in ihrer physikalischen Qualität verändert. Das Schichtmaterial wird so gewählt, daß es - ggf. auch aufgrund einer Nachbehandlung nach dem Aufbringen der Schicht - bis zur für die Herstellung der Verbindung notwendigen Druckbelastung stabil bleibt. Mit der Schicht wird die Fügestelle fixiert und an ihrer Naht versiegelt. Im Anschluß daran werden die zusammengefügten Werkstückteile durch heißisostatisches Pressen (HIP) diffusionsverschweißt. Beim HIP-Verfahren wirkt auf die Werkstückteile ein allseitig gleichmäßiger Druck, der sich auch gleichmäßig auf die Verbindungsflächen an der Fügestelle auswirkt, unabhängig davon, wie die Werkstückteile geformt sind oder welche Oberflächenstruktur die Verbindungsflächen aufweisen. So lassen sich beim heißisostatischen Pressen beispielsweise metallische Verbindungsflächen sehr gleichmäßig auch über die Fließspannungsgrenze hinaus belasten, ohne daß ungewollte Verformungen auftreten. Die druckbeschleunigte Diffusionsrate beim HIP-Verfahren verbessert das Schließen von Restporen an der Fügestelle bei relativ geringem Kornwachstum im Vergleich zum drucklosen Sintern.

Die Naht wird an der Fügestelle durch Plasmaspritzen beschichtet. Dabei wird die Schicht mittels eines Plasmabrenners, insbesondere mittels einer Plasmaspritzpistole aufgetragen, bei der durch die Brennerdüse strömendes, stark erhitztes Gas als Fördermittel und Träger von Metall- oder Keramikpulver dient, das nach Aufschmelzen im Gas und Erstarren auf der Oberfläche der Werkstückteile an der Nahtstelle die gewünschte Schicht bildet, die an der Fügestelle die noch unverbundenen Werkstückteile fixiert. Durch Plasmaspritzen lassen sich hohe Materialdichten in der Schicht, also geringe Porositäten und hohe Gasdichtigkeiten für Argon, Stickstoff oder andere Gasatmosphären erreichen, die beim HIP-Verfahren im Arbeitsraum eingesetzt sind. Es läßt sich das atmosphärische Plasmaspritzen (APS) , aber auch das Vakuumplasmaspritzen (VPS) anwenden, um innerhalb der Schicht zwischen den verspritzten Pulverteilchen, aber auch zwischen Schicht und Wandoberfläche der zu verbindenden Werkstückteile einen innigen Diffusionsverbund zu erreichen. Um den Diffusionsverbund in der aufgetragenen Schicht an der Fügestelle zu erhöhen, kann es nach Patentanspruch 2 zweckmäßig sein, die Schicht nach ihrem Aufbringen durch Niederdrucksintern noch zu verdichten.

Als Schichtwerkstoffe eignen sich prinzipiell alle aufschmelzbaren Werkstoffe, so daß im allgemeinen zu jedem zu verbindenden Werkstückpaar auch ein mit den Werkstoffen der Werkstücke kompatibler Schichtwerkstoff gewählt werden kann. So ist z.B. für oxiddispersionsgehärtete Legierungen (ODS-Legierungen) auf Fe-Basis ein FeCrAl-Pulver oder Ni-Basis-ODS-Legierungen ein NiCrAl-Pulver einsetzbar. Für hochwarmfeste Legierungen, wie beispielsweise unter der Bezeichnung Hastelloy X bekannte Legierungen, ist ein NiFeCr-Pulver zweckmäßig. Bei keramischen Werkstückteilen wird zur Ausbildung der Schicht bevorzugt die gleiche Keramik verwendet, wie sie die Werkstücke aufweisen, also bei Werkstückteilen aus Al₂O₃ ein Al₂O₃-Pulver. Die an der Fügestelle aufgetragene Schicht ist aus einem Werkstoff auszubilden, der insbesondere hinsichtlich seines Temperaturausdehnungskoeffizienten mit dem Werkstoff der Werkstückteile kompatibel ist. Notwendig ist auch eine ausreichende mechanische Stabilität der Schicht, um dem beim HIP-Verfahren aufzubringenden Gasdruck bis zu 400 MPa bei hoher HIP-Temperatur standzuhalten. Die mechanische Stabilität der Schicht muß so groß sein, daß der Diffusionsverbund an der Fügestelle beim heißisostatischen Pressen herbeigeführt ist, ehe der Werkstoff der Schicht durch Fließvorgänge in die Fugen an der Nahtstelle eindringen kann und den gewünschten Diffusionsverbund zwischen den Werkstückteilen stört.

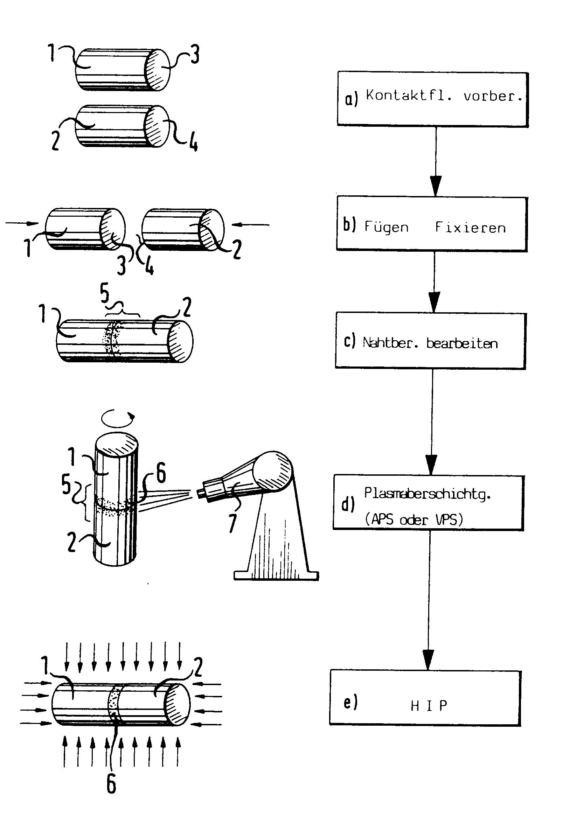

Die Erfindung wird nachfolgend anhand von Ausführungsbeispielen näher erläutert. In der Zeichnung ist schematisch der Verfahrensablauf in einzelnen Verfahrensschritten anhand eines Fließbildes wiedergegeben.

In der Zeichnung ist ein Verfahren zum Diffusionsverschweißen von zwei Werkstückteilen 1 und 2 schematisch wiedergegeben. In einem ersten Verfahrensschritt a werden zunächst miteinander zu verbindende Flächen 3, 4 der Werkstückteile 1, 2 entsprechend präpariert, beispielsweise durch Schleifen, Polieren, Entfetten, Ätzen. Die Werkstückteile 1, 2 werden anschließend an der Fügestelle zusammengesetzt und in dieser Stellung fixiert, Verfahrensschritt b. Die Werkstückteile sind zur Bearbeitung rotierbar angeordnet. Im dritten Verfahrensschritt c wird ein ausreichender äußerer Nahtbereich 5 an der Fügestelle zum Beschichten mit einer mit den Werkstoffen der Werkstücke kompatiblen Schicht 6 vorbereitet. Im Ausführungsbeispiel wird der Nahtbereich 5 vor seiner Beschichtung sandgestrahlt.

Die Schicht 6 wird auf den Nahtbereich 5 mit Verfahrensschritt d aufgebracht. Es ist vorgesehen, den Nahtbereich 5 durch Plasmaspritzen mit einer Plasmaspritzspistole 7 zu beschichten. Die Werkstückteile 1 und 2 drehen sich beim Auftragen der Schicht 6 unter dem Plasmastrahl derart mehrmals hindurch, daß sich eine Materialschicht in einer Dicke zwischen 100 bis 700 µm ausbildet. Die mit der Schicht 6 an ihrer Fügestelle überzogenen Werkstückteile werden dann anschließend in einer HIP-Anlage heißisostatisch diffusionsverschweißt, Verfahrensschritt e.

Durch Anwenden dieses Verfahrens wurden die nachfolgend beschriebenen Verbindungen hergestellt:

### Ausführungsbeispiel 1

Es wurde eine Metall/Metall-Verbindung hergestellt. Die zu verbindenden Werkstückteile bestanden beide aus einer ODS-Legierung. Die miteinander zu verbindenden Flächen wurden vor dem Zusammensetzen der Werkstückteile geschliffen und entfettet. Die Werkstückteile wurden drehbar befestigt und im Nahtbereich an der Fügestelle zunächst sandgestrahlt. Der Nahtbereich wurde durch Plasmaspritzen beschichtet. Im Ausführungsbeispiel wurde die Schicht durch Vakuumplasmaspritzen (VPS) aufgebracht. Als Plasmagas wurde ein Argon/Wasserstoffgemisch verwendet. Der Nahtbereich wurde mit einer FeCr-Schicht versiegelt. Der Spritzdruck war auf p = 5000 bis 6000 Pa (50 bis 60 mbar) eingestellt, die Schicht wurde mit der Plasmaspritzpistole aus einem Abstand 1 = 270 bis 280 mm aufgebracht. Die aufgebrachte Schicht wies eine Dicke d = 200 µm auf. Die Schicht war gasdicht, die Helium-Leckrate betrug < 10⁻¹⁰ Pa·m³/sec (10⁻⁹ mbar · 1/sec.)

Zum Diffusionsverschweißen wurde das durch Beschichtung fixierte und nun einfach handhabbare Werkstück in einer HIP-Anlage heißisostatisch verpreßt. Die Temperatur in der HIP-Anlage betrug T = ca. 1100°C, der Druck P betrug P = 150 MPa und die Behandlungsdauer t = 1 bis 3 h.

Bei Prüfung der hergestellten Werkstückverbindung im Zugversuch wurde bei Raumtemperatur eine Bruchfestigkeit von 500 MPa erreicht. Dies entsprach einer Festigkeit von 80 % der Festigkeit der ODS-Legierung, aus der die Werkstückteile gefertigt waren.

### Ausführungsbeispiel 2

Es wurde eine Metall/Keramik-Verbindung hergestellt, ein Werkstücksteil bestand aus Si₃Ni₄, das andere aus Hastelloy X. Die mit dem Werkstückteil aus Keramik zu verbindende Metallfläche wurde poliert, die Keramikfläche feingeschliffen. Der Nahtbereich an der Fügestelle wurde in gleicher Weise wie im Ausführungsbeispiel 1 durch Plasmaspritzen beschichtet, als Schichtwerkstoff wurde eine NiCr-Legierung verwendet. Die Daten beim Plasmaspritzen entsprachen dem Ausführungsbeispiel 1. Es wurde eine Schicht in einer Dicke von d = 400 µm aufgebracht. Die Schicht wies eine Helium-Leckrate < 10⁻¹⁰ Pa·m³/sec (10⁻⁹ mbar · 1/sec) auf.

Zum Diffusionsverschweißen der Fügestelle wurde in der HIP-Anlage eine Temperatur T ≦ 1200°C und ein Druck P = 200 MPa eingestellt. Die Behandlungsdauer t betrug t ≦ 1 h.

### Ausführungsbeispiel 3

Es wurde eine Keramik/Keramik-Verbindung hergestellt. Die Werkstückteile bestanden beide aus Si₃N₄. Die zu verbindenden Flächen der Werkstückteile waren feingeschliffen.

Der Nahtbereich wurde durch Vakuumplasmaspritzen (VPS) beschichtet. Als Schichtmaterial diente Silicium (Si) . Vor dem heißisostatischen Pressen wurde die Si-Schicht in Stickstoffatmosphäre gesintert und in Si₃N₄ umgewandelt. Nach dem Sinterungs- und Umwandlungsprozess war die Schicht an der Fügestelle im Nahtbereich gasdicht.

Das Diffusionsverschweißen der Werkstückteile erfolgte in der HIP-Apparatur bei T = 1900°C und P = 200 MPa in Stickstoffatmosphäre. Die Behandlungsdauer t betrug t = 2 bis 3 h.

Zur Ermittlung der Festigkeit der Verbindung wurde die VierPunkt-Biegebruchfestigkeit (Biegebelastung mit zwei Auflagern und zwei Belastungspunkten zwischen den Auflagern mit einer Probenabmessung Probenbreite b = 4,5 mm, Probenhöhe h = 3,5 mm, Probenlänge l = 50 mm und einem Abstand der äußeren zwei Auflager von Lₐ = 40 mm, und einem Abstand der inneren zwei Belastungspunkte von Lᵢ = 20 mm, woraus sich eine Biegebelastung mit einer Biegearmlänge von L = 10 mm ergibt) für die miteinander verbundenen keramischen Werkstückteile bestimmt. Bei Raumtemperatur wurde eine Vierpunkt-Biegebruchfestigkeit von 750 MPa erreicht. Dieser Wert lag innerhalb der Streubreite der Vierpunkt-Biegebruchfestigkeit des Grundwerkstoffes der Werkstückteile.

In den Ausführungsbeispielen konnte die notwendige hohe Dichtigkeit und geringe Porosität der im Nahtbereich aufzutragenden Schicht durch Diffusionsverbund der verspritzten Materialien erreicht werden. Nach ihrem Erstarren erwiesen sich die Schichten auch bei hohen Drücken während des heißisostatischen Pressens für die als HIP-Medium verwendeten Gase wie z.B. Argon oder Stickstoff als gasdicht. Im Falle von metallischen Werkstoffen als Beschichtungsmaterial ist der Diffusionsverbund in erster Linie durch Anwenden des Vakuumplasmaspritzens zu erreichen, da dabei Gaskomponenten wie Sauerstoff, Stickstoff, Kohlenoxide und Wasserstoff ferngehalten werden können. Um einen ungestörten Diffusionsverbund bei Metallen zu erreichen, muß die Bildung beispielsweise von oxidischen, karbidischen oder nitridischen Reaktionsprodukten vermieden werden. Keramische Werkstoffe wie Al₂O₃ Cr₂O₃, ZrO₂ lassen sich ohne weiteres durch atmosphärisches Plasmaspritzen beschichten. Bei nitridischen Werkstoffen, wie z.B. Si₃N₄ wird - wie im Ausführungsbeispiel 3 bereits beschrieben - ein reaktives Plasmaspritzen angewandt: Es wird Si in einem Stickstoff enthaltenden Trägergas aufgespritzt, so daß sich während des Beschichtungsprozesses bereits Si₃N₄ bildet. Ein weiteres Aufnitrieren kann dann vor dem HIP-Prozess durch Sintern der aufgebrachten Schicht in Stickstoffatmosphäre erfolgen. Auf diese Weise wird die Fügestelle im Nahtbereich mit einer dem Werkstoff der Werkstückteile kompatiblen Schicht gasdicht versiegelt.

Im Ausführungsbeispiel rotieren die zusammenzufügenden Werkstückteile im Bereich des Plasmastrahls der Plasmaspritzpistole. Der Plasmastrahl ist senkrecht auf den Nahtbereich ausgerichtet. Die Naht wird so vollständig vom Schichtmaterial bedeckt, und es wird eine genügende Schichtdicke erreicht. Selbstverständlich ist die Bewegung von Werkstückteilen und Plasmaspritzpistole aber auch in anderer Weise durchführbar, beispielsweise läßt sich beim Verbinden eines Ringes mit einer Welle auch der Bewegungsvorgang des Plasmaspritzbrenners entsprechend anpassen. Lassen sich mit dem erforderlichen Schichtmaterial nur geringere Porositäten erreichen, so läßt sich dies durch eine größere Schichtdicke kompensieren.

Die besonderen Vorteile des Diffusionsverschweißens durch HIP-Verfahren bestehen einmal in der allseitig gleich starken Druckaufbringung, so daß auch nicht ebene und komplizierte Oberflächenstrukturen diffusionsverbindbar sind. Es lassen sich nicht verschweißbare Werkstoffe miteinander verbinden, ein Löten entfällt. Darüber hinaus ist aber auch die Größe der zu verbindenden Oberflächen nur durch das Arbeitsvolumen der HIP-Anlage beschränkt, der Flächendruck stellt insoweit keine Begrenzung dar wie beim einaxialen Heißpressen.

## Patentansprüche

1. Verfahren zum Verbinden von Werkstücken (1,2) aus Metall und/oder Keramik durch Anwendung heißisostatischen Pressens (HIP) und Grenzflächendiffusion zwischen den Werkstoffen der Werkstücke an ihrer Fügestelle (5), wobei die miteinander zu verbindenden Flächen (3,4) der Werkstücke (1,2) aneinander gelegt und in dieser Stellung fixiert werden, und wobei die Fügestelle (5) beim nachfolgendem heißisostatischen Pressen gasdicht abgeschlossen wird,
**dadurch gekennzeichnet,**
daß das Fixieren der aneinandergelegten Flächen (3,4) durch Plasmaspritzbeschichtung des äußeren Randes der Fügestelle (5) mit einer mit den Werkstoffen der Werkstücke (1,2) kompatiblen Schicht (6) erfolgt, die bis zum beim heißisostatischen Pressen aufzubringenden Druck mechanisch stabil ist und die Fügestelle (5) beim heißisostatischen Pressen gasdicht versiegelt.

2. Verfahren nach Anspruch 1,
**dadurch gekennzeichnet,**
daß dem HIP-Schritt ein Niederdrucksintern der Schicht (6) vorausgeht.

## Claims

1. Method for the connecting of workpieces (1, 2) made of metal and/or ceramics by using hot isostatic pressing (HIP) and interface diffusion between the materials of the workpieces at their joint region (5), wherein those surfaces (3, 4) of the workpieces (1, 2) which are to be connected to one another are laid against one another and are fixed in this position, and wherein the joint region (5) is closed in gas-tight manner at the subsequent hot isostatic pressing operation, characterised in that the fixing of the placed-together surfaces (3, 4) is effected by plasma spray coating of the outer edge of the joint region (5) with a coating (6) which is compatible with the materials of the workpieces (1, 2) and which is mechanically stable up to the pressure to be applied at hot isostatic pressing, and seals the joint region (5) in gas-tight manner during the hot isostatic pressing.

2. Method according to claim 1, characterised in that a low-pressure sintering of the coating (6) is carried out before the HIP stage.

## Revendications

1. Procédé pour joindre des pièces à usiner (1, 2) en métal et/ou en matériau céramique par utilisation de compression isostatique à température élevée (HIP) et de diffusion à l'interface entre les matériaux des pièces à usiner, dans leur zone de joint (5), les faces à joindre (3, 4) des pièces à usiner (1, 2) étant appliquées l'une contre l'autre et fixées dans cette position, et la zone de joint (5) étant isolée de manière étanche aux gaz lors de la compression isostatique à température élevée consécutive, **caractérisé** en ce que la fixation en position des faces (3, 4) appliquées l'une contre l'autre s'effectue en enduisant, par projection au plasma, le bord extérieur de la zone de joint (5) d'une couche (6), compatible avec les matériaux des pièces à usiner (1, 2), qui est mécaniquement stable jusqu'à la pression à exercer lors de la compression isostatique à température élevée et qui scelle la zone de joint (5) de manière étanche aux gaz lors de la compression isostatique à température élevée.

2. Procédé selon la revendication 1, **caractérisé** en ce que l'étape de compression isostatique à température élevée (HIP) est précédée d'un frittage à basse pression de la couche (6).
